# EUROPÄISCHE PATENTSCHRIFT

(11) **EP 3 437 169 B1**
(45) Veröffentlichungstag und Bekanntmachung des Hinweises auf die Patenterteilung: **12.07.2023**
(21) Anmeldenummer: 17707814.4
(22) Anmeldetag: 27.02.2017
(51) Int. Cl.: H02H 3/20, H02H 9/04, H02H 9/00, H02H 3/06, H02H 1/06

(54) **SCHALTUNGSANORDNUNG ZUM SCHUTZ VON AN EINEM MEHRPHASIGEN NETZ ANGESCHLOSSENEN VERBRAUCHERN MIT UNTER- UND ÜBERSPANNUNGSABSCHALTFUNKTION**
CIRCUIT ARRANGEMENT FOR PROTECTING LOADS CONNECTED TO A MULTI-PHASE NETWORK, HAVING UNDERVOLTAGE AND OVERVOLTAGE SWITCH-OFF FUNCTION
AGENCEMENT DE CIRCUITS À FONCTION DE DÉCONNEXION À MINIMUM OU MAXIMUM DE TENSION POUR LA PROTECTION DE CONSOMMATEURS, RACCORDÉS À UN RÉSEAU POLYPHASÉS

(30) Priorität: 29.03.2016 DE 102016003782; 30.08.2016 DE 102016116093
(43) Veröffentlichungstag der Anmeldung: 06.02.2019
(73) Patentinhaber: DEHN SE, 92318 Neumarkt i.d. OPf. (DE)
(72) Erfinder: EHRHARDT, Arnd, 92318 Neumarkt/Opf. (DE); BÜHLER, Klaus, 90542 Eckental (DE); EHRLER, Jens, 92318 Neumarkt/Opf. (DE)
(74) Vertreter: Prinz & Partner mbB
(86) Internationale Anmeldenummer: PCT/EP2017/054430
(87) Internationale Veröffentlichungsnummer: WO 2017/167514

(56) Entgegenhaltungen:
- EP-A2- 2 403 089
- US-A- 3 629 657
- US-A- 4 562 506
- US-A1- 2002 080 542
- US-A1- 2015 058 652

## Beschreibung

Die Erfindung betrifft eine Schaltungsanordnung zum Schutz von an einem mehrphasigen Netz angeschlossenen Verbrauchern mit Unter- und Überspannungsabschaltfunktion, transientem Überspannungsschutz und Netzwiederzuschaltung, wobei der jeweilige Verbraucher mittels eines mehrpoligen Schalters mit dem Netz verbindbar sowie zwischen dem Schalter und dem Netz der transiente Überspannungsschutz vorgesehen ist, weiterhin mit einer Netzspannungsauswerteeinheit, welche zur Auslösung des Schalters mit diesem steuerungsseitig und mit einer Wiedereinschalteinheit verbunden ist, und einer am Netz anliegenden Spannungsversorgungsbaugruppe gemäß Oberbegriff des Anspruchs 1.

Im Bereich der dezentralen Energieversorgung und insbesondere in der Eigenversorgung von Energieerzeugern, wie z.B. Windkraftanlagen, weicht die Qualität der Netzspannung häufig und stark von denen konventioneller Energieversorgungen ab. Dies betrifft insbesondere auch den Aufbau von Anlagen und den Probebetrieb vor dem eigentlichen Anschluss und der Integration des Energieerzeugers an bzw. in das Energienetz.

Die jeweilige Spannung kann hierbei in der Höhe deutlich von der Netzspannung, und zwar auch über längere Zeiträume abweichen. An einer solchen Energieversorgung sind häufig komplexe elektronische Komponenten und Steuerungen vorhanden, welche sowohl bei Unterspannungen als auch bei Überspannungen, welche gering von der Nennspannung abweichen, schnell und erheblich beschädigt werden können. Diese Schädigungen betreffen nicht nur aktive Bauteile, sondern auch zahlreiche passive Komponenten, wie beispielsweise Energiespeicher, Kapazitäten und so weiter.

Üblicherweise in derartige Geräte eingesetzte Überspannungsableiter sind insbesondere für transiente Belastungen, nicht jedoch für temporäre oder permanente Überspannungen ausgelegt. Infolge der zum Teil stark abweichenden Bedingungen treten bereits häufig bei Probeläufen der jeweiligen Anlage noch vor der eigentlichen Inbetriebnahme Ausfälle von Komponenten oder Einzelteilen auf, was zu aufwendigen Wartungs- und Reparaturarbeiten sowie zu einer Verzögerung bei der tatsächlichen Inbetriebnahme führt.

Auch im späteren Betrieb werden derartige Anlagen, um einen stabilen Betrieb am Netz zu gewährleisten, häufig bewusst über eine gewisse Zeit außerhalb des Toleranzbereichs üblicher Netze betrieben. Die Belastung der eingesetzten Bauteile liegt bei gleicher Nennspannung bereits ohne weitere Spannungserhöhungen im Grenzbereich.

Der Toleranzbereich zwischen zulässiger Dauerbetriebsspannung und zeitweiliger Überspannungen, bei welchen abgeschaltet werden muss, ist daher enger als bei klassischen Netzen. Aufgrund des ohnehin grenzlastigen Betriebs der Bauteile steigen auch die Anforderungen an die Genauigkeit der Spannungsmessung und insbesondere auch an die Abschaltzeiten.

Die zu schützenden Steuerungen und Anlagenkomponenten müssen fernsteuerbar ausgeführt sein und besitzen eine Nennspannung von 230 V bzw. werden dreiphasig mit 230 V / 400 V versorgt. Übliche Nennströme liegen in einem Bereich zwischen 10 A und 100 A. Neben den Voraussetzungen zum Schutz vor Überspannungen sind auch ähnliche Bedingungen bei Unterspannungen zu berücksichtigen.

Schaltgeräte für den oben genannten Spannungs- und Strombereich als Über- und Unterspannungsauslöser sind beispielsweise aus der DE 600 07 361 T2 bekannt. Die Spannungsmessung und Bewertung erfolgt über einen Zeitraum von mehreren Millisekunden. Eine Unterbrechung der Netzversorgung kann nach mehreren einhundert Millisekunden bzw. beim Einsatz von Verzögerungsgliedern im Sekundenbereich liegen. Die US 2015/058652 A1 offenbart ein Kommunikationsnetzwerk mit einer Einrichtung zum Schutz der Spannungsversorgung, die die Spannungsversorgung bei Über- oder Unterschreiten vorgegebener Spannungsgrenzwerte mittels eines Hybridschalters unterbricht bzw. zuschaltet.

Die US 2015/058652 offenbart eine Schaltvorrichtung zum Schutz der Spannungsversorgung eines Kommunikationsnetzwerks vor transienten und temporären Überspannungen.

Aus der US 2002/080542 A1 ist eine Schaltanordnung mit einer Spannungsüberwachungseinheit bekannt, um eine Last in einem mehrphasigen Netz zu schützen.

Die US 3 629 657 A zeigt eine Überwachungsschaltung für ein Energieübertragungssystem, wobei die Überwachungsschaltung bei nicht ausreichender Netzspannung über eine Batterie versorgt wird, welche mittels eines Spannungsreglers angeschlossen ist. Der Spannungsregler sperrt im Normalbetrieb und stellt erst bei nicht ausreichender Netzspannung eine Verbindung her.

Die EP 2 403 089 A2 offenbart eine Schaltungsanordnung mit einem Überlastrelais und einem Schaltschütz, der im Überlastfall einen Motor vom Netz trennt. Das Überlastrelais speichert mittels eines Kondensators im Normalbetrieb Energie, welche für einen Schaltvorgang mittels einer Zylinderspule genutzt werden kann, der wiederum ein Öffnen des Schaltschütz 24 über eine weitere Zylinderspule bewirkt.

Aus der US 4 562 506 A ist eine Schaltanlage zum Abtrennen von Phasen aus einem Netz bekannt, welche eine Kontrollschaltung mit einer Batterie umfasst. Die Batterie lädt einen Kondensator, der eine Auslöseschaltung versorgt. Zusätzlich ist eine Beschleunigungsschaltung vorgesehen, die den Kondensator bei Bedarf schneller auf die benötigte Betriebsspannung bringen soll.

Aus der EP 1 701 424 B1 ist eine kombinierte elektrische Niederspannungsschutzvorrichtung gegen transiente und länger anhaltende Überspannungen mit automatischer Wiederverbindung vorbekannt.

Bei der dortigen Schaltungsanordnung ist netzseitig eine Spannungsversorgung angeschlossen und ein transienter Überspannungsschutz vorgesehen. Auf der Basis einer Netzspannungsauswerteeinheit erfolgt das Auslösen von Schaltern, ausgebildet als magnetothermische Schalter oder als solche Schalter, die auf Differenzspannungen ansprechen, so dass ein Schutz gegen Überspannungen durch Abschaltung möglich ist.

Transiente Überspannungen werden durch den Einsatz von Metalloxidvaristoren in Verbindung mit einer thermischen Abtrennvorrichtung vom nachfolgenden Verbraucher ferngehalten.

Es hat sich jedoch gezeigt, dass die in der EP 1 701 424 B1 beschriebene technische Lösung ein sehr träges Verhalten besitzt, wobei die Reaktionszeiten bei einer notwendigen Netztrennung oft nicht ausreichend sind. Die bekannte Vorrichtung ist nicht in der Lage, die zeitliche Lücke zwischen transientem Schutz und temporärem Schutz zu schließen, woran auch ein weitergebildetes verbessertes Auswerteverfahren zur aktuellen Spannungserfassung nichts Wesentliches ändert. Darüber hinaus besteht bei der Lösung des Standes der Technik nach der Abschaltung kein ausreichender Überspannungsschutz, insbesondere der netzseitig nach wie vor anliegenden Baugruppen.

Aus dem Vorgenannten ist es daher Aufgabe der Erfindung, eine weiterentwickelte Schaltungsanordnung zum Schutz von an einem mehrphasigen Netz angeschlossenen Verbrauchern mit Unter- und Überspannungsabschaltfunktion, transientem Überspannungsschutz und Netzwiederzuschaltung anzugeben, wobei bereits vor einem erstmaligen Zuschalten der Netzversorgung die Verbraucher und die Schaltung selbst vor transienten, temporären oder auch dauerhaften Überspannungen bis oberhalb der verketteten Spannung des Netzes ohne Einschränkung der notwendigen Funktionalität geschützt ist.

Weiterhin soll bei höheren Spannungen ein für die Schaltungsanordnung und den Verbraucher sicherer Zustand erreicht werden.

Die Lösung der Aufgabe der Erfindung erfolgt durch eine Schaltungsanordnung zum Schutz von an einem mehrphasigen Netz angeschlossenen Verbrauchern gemäß der Merkmalskombination nach Anspruch 1, wobei die Unteransprüche mindestens zweckmäßige Ausgestaltungen und Weiterbildungen umfassen.

Die erfindungsgemäße Schaltungsanordnung ist in der Lage, transiente und temporäre Über- und Unterspannungen zu unterscheiden und den Verbraucher innerhalb eines engen Toleranzfensters bei temporären Vorgängen selbständig vom Netz zu trennen bzw. mit dem Netz zu verbinden.

Die Zeit für die Abtrennung vom Netz ist auf < 10 ms begrenzbar.

Bei auftretenden transienten Störungen soll die Schaltungsanordnung zu keinen Beeinträchtigungen vorhandener bzw. zusätzlicher Überspannungsschutzeinrichtungen führen.

Erfindungsgemäß basiert die Schaltungsanordnung auf einem Schalter mit Lastschaltvermögen, welcher über eine schnelle Auslösemöglichkeit verfügt und der über eine Steuereinheit schließbar ausgeführt ist.

Es ist also der erfindungsgemäße Schalter als schnell auslösender, mechanischer, induktivitätsarmer Schalter ausgebildet, welcher zur Führung von Impulsströmen geeignet ist und wobei die für das Auslösen des Schalters erforderliche Energie unabhängig vom Netzzustand und der jeweiligen Phasenlage von einer Energiespeichereinheit bereitgestellt wird.

Der vorgesehene, am Netz anliegende und beim Auslösen des Schalters nicht vom Netz getrennte transiente Überspannungsschutz sichert die am Netz verbleibenden Komponenten der Schaltungsanordnung gegenüber Spannungen und geht bei hohen und lang andauernden Überspannungen in einen Kurzschlusszustand, d.h. in einen Fail-Safe-Zustand über.

Erfindungsgemäß weist der transiente Überspannungsschutz einen einstellbaren Schutzpegel auf, wobei in Abhängigkeit von einem Ausgangssignal der Netzspannungsauswerteeinheit eine Anpassung oder Umschaltung des Schutzpegels vorgenommen wird.

In Weiterbildung der Erfindung ist ausgangsseitig des erfindungsgemäßen Schalters ein verbraucherseitiger weiterer Überspannungsschutz vorgesehen. Dieser weitere Überspannungsschutz besitzt ein Ableitvermögen von im Wesentlichen 20 kA der Impulsform 8/20 µs mit einem Schutzpegel von ca. 1,5 kV, wobei das Abtrennen des weiteren Überspannungsschutzes bei temporären Überspannungen durch Öffnen des Schalters einen niedrigen Schutzpegel für den jeweils angeschlossenen Verbraucher erlaubt.

Eine Wiedereinschalteinheit ist in Verbindung mit dem Schalter in der Lage, diesen innerhalb einer Zeitdauer von < 1 s, bevorzugt < 200 ms zu schließen oder zu öffnen.

Die elektrische Energie für die Wiedereinschalteinheit wird entweder aus der Spannungsversorgungsbaugruppe, die mit dem Netz in Verbindung steht, gewonnen oder aus einem Pufferspeicher zur Verfügung gestellt.

Darüber hinaus ist eine unterbrechungsfreie Stromversorgung für die Netzspannungsauswerteeinheit vorgesehen. Damit ist die Erfassung einer wieder anliegenden Netzspannung oder das Wiedererreichen eines bestimmten Toleranzbereichs sicher bestimmbar, so dass ein Wiedereinschalten eines im Vorfeld abgetrennten Verbrauchers sicher möglich ist.

Über eine Schnittstelle ist eine externe Überwachung des Zustands des Schalters bzw. des gesamten Zustands der Schaltungsanordnung sowie ein externes Betätigen des Schalters realisierbar.

Der mehrphasig ausgebildete erfindungsgemäße Schalter ist so ausgelegt, dass ein Schaltverzug zwischen den jeweiligen Phasen ausgeschlossen wird.

Der mit dem Netz verbundene transiente Überspannungsschutz kann bevorzugt als triggerbare Funkenstreckenanordnung ausgeführt sein.

Die Erfindung soll nachstehend anhand eines Ausführungsbeispiels sowie unter Zuhilfenahme von Figuren näher erläutert werden.

Hierbei zeigen:
Fig. 1 ein Blockschaltbild einer ersten Ausführungsvariante der erfindungsgemäßen Schaltungsanordnung mit zwei transienten Überspannungsschutzeinrichtungen;
Fig. 2 beispielhafte Funktionsabläufe mit einem Spannungsverlauf U1 des Netzes vor dem erfindungsgemäßen Schalter sowie einen Spannungsverlauf U2 am Verbraucher hinter dem Schalter, wobei mit T1 die maximale Verzugszeit zum Ausschalten des Verbrauchers, mit T2 die Zeit für ein autonomes Wiedereinschalten, mit T3 die Wiedereinschaltzeit und mit T4 die Zeit für ein externes Wiedereinschalten bezeichnet ist, und
Fig. 3 eine weitere Ausführungsform der erfindungsgemäßen Schaltungsanordnung mit lediglich einer Überspannungsschutzeinheit und der Möglichkeit der Triggerung dieser ausgehend von einem Signal der Netzspannungsauswerteeinheit.

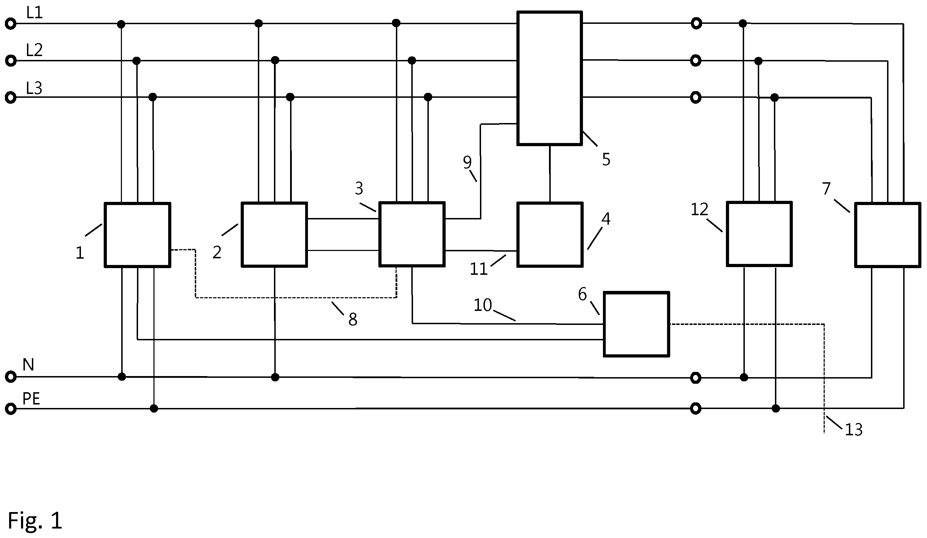

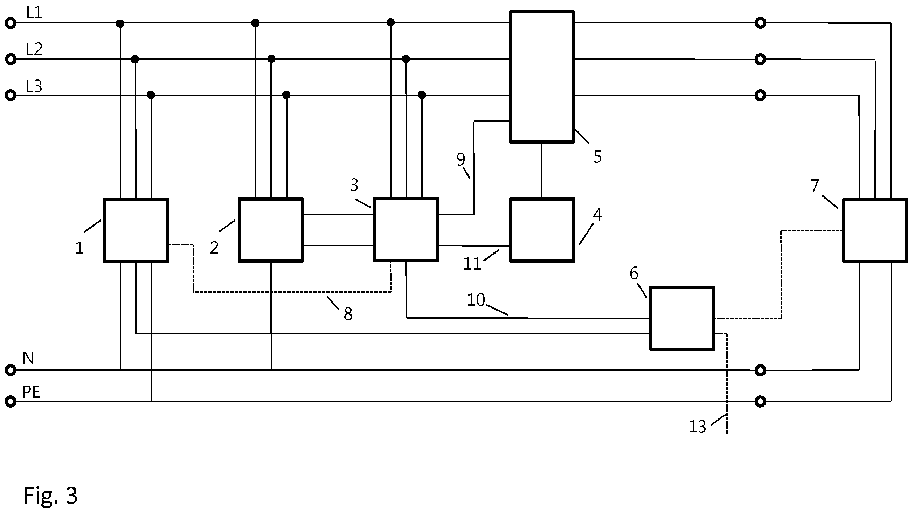

Die Schaltungsanordnungen nach den Fig. 1 und 3 gehen von einem mehrphasigen Netz L1, L2 und L3 sowie mit einem Neutralleiter N und PE aus.

Am Netz ist bezogen auf jede Phase ein transienter Überspannungsschutz 1 angeschlossen.

Ebenfalls am Netz liegt eine Spannungsversorgungsbaugruppe 2.

Die Spannungsversorgungsbaugruppe 2 liefert die DC-Versorgungsspannung für eine Netzspannungsauswerteeinheit 3, die diesbezüglich mit den Phasen L1, L2 und L3 in Kontakt steht.

Die Baugruppe 3 dient nicht nur zur Auswertung der Netzspannung, sondern liefert darüber hinaus auch Steuersignale für den erfindungsgemäßen mehrphasigen, als Schnellauslöser ausgebildeten Schalter 5 und bezüglich einer Wiedereinschaltbaugruppe 4 zur Netzwiederzuschaltung. Über die Signalleitung 9 wird ein Steuersignal zum Trennen, d.h. zum Auslösen des Schalters 5 zur Verfügung gestellt, wobei über die Signalleitung 11 ein Einschaltsignal bereitgestellt wird.

Eine externe Schnittstelle 6 steht mit einer externen Überwachungs- und Ansteuerungsleitung 13 einerseits sowie mit Steuerleitungen 10 in Verbindung.

Die Steuerleitungen 10 gelangen einerseits auf die Netzspannungsauswerteeinheit 3 sowie andererseits auf den transienten Überspannungsschutz 1.

Erfindungsgemäß verfügt der transiente Überspannungsschutz 1 über einen einstellbaren Schutzpegel. In Abhängigkeit von einem Ausgangssignal der Netzspannungsauswerteeinheit 3 wird über die Leitung 8 eine Anpassung oder ein Umschalten des Schutzpegels des Überspannungsschutzes 1 bewirkt.

Ausgangsseitig zwischen dem Schalter 5 und dem Verbraucher 7 ist ein weiterer, zweiter Überspannungsschutz 12 für die einzelnen Phasen vorhanden. Dieser weitere, transiente Überspannungsschutz stellt einen verbraucherseitigen Überspannungsschutz dar.

Gemäß der Darstellung nach Fig. 1 erfolgt also eine Einspeisung über ein Fünfleitersystem, wobei der Verbraucher 7 über die Schaltvorrichtung 5 mit der Einspeisung verbunden ist.

Die Schaltvorrichtung 5 verbindet bevorzugt nur die Phasen L1 bis L3 mit dem Verbraucher 7.

Der erwähnte Überspannungsschutz 12 ist der Schaltvorrichtung 5 nachgeordnet ist damit nahe am Verbraucher 7 befindlich.

Der weitere Überspannungsschutz 12 wird als Überspannungsschutz vom Typ 2 mit einem Nennableitvermögen von 20 kA in der Impulsform 8/20 µs ausgeführt und besitzt einen Schutzpegel von im Wesentlichen 1,5 kV bei einer Nennspannung von beispielsweise 230 V bis 275 V bzw. bei einer 230 / 400 V Einspeisung.

Überspannungsableiter vom Typ 2 auf der Basis von Varistoren sind aufgrund ihres schnellen und kontinuierlichen Ansprechverhaltens sowie anpassbarer niedriger Schutzpegel sehr gut zum Schutz von Verbrauchern geeignet. Diese Überspannungsschutzableiter 12 besitzen jedoch im Allgemeinen eine nur geringe Überlastfähigkeit bei temporären Überspannungen, wodurch die Abtrennung durch den Schalter 5 bei erhöhten Spannungen sinnvoll ist. Bei der Ausführung der Überspannungsschutzeinrichtung 1 als eine triggerbare Funkenstrecke kann gegebenenfalls der gleiche Schutzpegel von 1,5 kV trotz einer deutlich höheren Festigkeit gegenüber temporären Überspannungen realisiert werden.

Das Trennen bzw. Abschalten wird mit Hilfe des Schalters 5 realisiert, der als mechanischer Schalter mit Schnellauslöseeinrichtung ausgebildet ist. Der Schalter ist frei von thermischen Auslöseeinrichtungen und wird auch nicht, wie beispielsweise bei Fl- oder Leistungsschaltern in eine Differenzstromauswertung eingebunden. Die Öffnung des Schalters erfolgt also unabhängig vom Strom über die Phasenleiter durch einen schnellen Auslösemechanismus. Eine derartige Ausführungsform erlaubt das Führen hoher Impulsströme, welche für eine optimale Funktion des Überspannungsschutzes 12 und damit für einen Schutz des Verbrauchers 7 im normalen Betriebszustand bzw. bei transienten Belastungen notwendig ist.

Die durch den Schalter mögliche Abtrennung des Überspannungsschutzes 12 vom Netz erlaubt ein Realisieren eines sehr niedrigen und optimalen Schutzpegels für den Verbraucher 7, da keine sonst üblichen Anforderungen bezüglich temporärer Belastungen an diesen Überspannungsschutz 12 gestellt werden müssen.

Damit im Fehlerfall bei temporären Überspannungen ein rasches und gleichzeitiges Öffnen aller Kontakte des Schalters 5 innerhalb weniger Millisekunden unabhängig von der Phasenlage des Netzes erfolgen kann, wird die Betätigung des Schalter-Auslösemechanismus bevorzugt und erfindungsgemäß mit einem Strom aus einem Energiespeicher bewirkt. Damit ist die Auslösung des Schalters 5 unabhängig von der Phasenlage und dem Stromfluss im Netz.

Der Schalter 5 kann als modifizierter Fl-Schalter mit Lastschaltvermögen mit einer Nennstromstärke > 63 A ausgeführt werden, bei welchem die drei Phasen nicht in eine ansonsten übliche Differenzstromauslösung eingebunden sind und die Auslösung gegebenenfalls direkt über den nicht am Netz angeschlossenen, sondern mit einem Hilfsstromkreis verbundenen Neutralleiter erfolgt.

Derartige modifizierte Schalter sind in der Lage, die jeweiligen Hauptkontakte innerhalb einer Zeit von < 3 ms zu öffnen. Eine derartige Schalteinrichtung ist um ein Vielfaches schneller als übliche Schütze oder Lasttrennschalter, welche ansonsten zum Schutz vor temporären Überspannungen Anwendung finden.

Der Schalter ist so ausgelegt, dass Ströme im Bereich des vier- bis zehnfachen Nennstroms unterbrochen werden können. Im geöffneten Zustand besitzen die Kontakte und Trennstrecken des Schalters eine Mindestimpulsspannungsfestigkeit von mehreren kV und eine Dauerspannungsfestigkeit, die höher ist als die verkettete Spannung des Netzes.

Der Schalter 5 ist mit der Einrichtung zum Wiedereinschalten 4 in Verbindung stehend, welche in der Lage ist, bei Ansteuerung den Schalter innerhalb einer Zeitdauer von < 1 s, bevorzugt von < 200 ms zu schließen und auch unabhängig von der Betätigung des eigentlichen Auslösemechanismus des Schalters zu öffnen.

Die Energie zum Aktivieren des Wiedereinschalters 4 wird z.B. aus der Spannungsversorgungsbaugruppe 2 oder aber einem nicht gezeigten Pufferspeicher gewonnen.

Die Betätigung des Schalters 5 bzw. des Wiedereinschalters 4 erfolgt über die bereits erläuterte Netzspannungsauswerteeinheit 3, welche eine Steuerungsfunktion besitzt. Diesbezüglich wird die Spannung zwischen den drei Phasen L1, L2 und L3 abgegriffen und mit vorgebbaren oder einstellbaren Grenzwerten verglichen. Als Grenzwert wird im Allgemeinen eine minimale Betriebsspannung und eine maximale Betriebsspannung mit engen Toleranzen von ≤ 3 % hinterlegt. Zusätzlich zu diesen Spannungen sind Schwellwerte hinterlegt, bei denen eine Meldung beim Über- oder Unterschreiten entsprechender Grenzwerte erfolgt.

Das automatische Zu- bzw. Abschalten der Netzversorgung des Verbrauchers 7 kann neben Schwellwerten auch über einstellbare Zeitdauern geregelt werden. Wird beispielsweise eine länger andauernde Abweichung von einem bestimmten Spannungsbereich erkannt, kann die Wiederinbetriebnahme an ein zusätzliches externes Steuersignal gebunden sein.

Dieses externe Steuersignal kann über den externen Anschluss 13, die Schnittstelle 6 und die Leitungen 10 übergeben werden, so dass eine Rückkehr in den automatischen Regelungszustand der Schaltungsanordnung erfolgt. Damit beim beispielsweisen Betrieb einer Windkraftanlage selbige auch bei stärkeren Abweichungen von der Nennspannung noch in Funktion bleibt, sind die Grenzen zwischen den zulässigen Betriebsspannungen und der Spannung, welche zu einer Abschaltung führt, eng gehalten. Beispielsweise kann ein Betrieb mit einer Spannung von 115 % noch dauerhaft auch ohne Meldung toleriert werden, hingegen muss beim Überschreiten einer Spannung von 130 % eine Abschaltung außerordentlich schnell, d.h. innerhalb < 10 ms erfolgen. Die vorgegebenen Werte dürfen auch bei unmittelbar zeitgleich auftretenden transienten Störgrößen nicht überschritten werden. Ein ähnliches Verhalten ist bei Unterspannungen gewünscht.

Eine Unterscheidung zwischen transienten Spannungen und temporären Belastungen erfolgt über eine hochgenaue Messung des Istwertes der jeweiligen Spannung und dem Vergleich mit einem oder mehreren Schwellwerten. Die transienten Belastungen werden über ein entsprechendes einstellbares Zeitglied bevorzugt zwischen 100 µs und 3 ms nicht bewertet. Wird der Schwellwert für eine längere Zeitdauer überschritten, erfolgt das Auslösen des Schalters 5 mittels des Energiespeichers.

Nach Öffnung des Schalters 5 ist der Verbraucher 7 vom Netz getrennt. Die Spannungsversorgung 2 und die Spannungsauswertung mit Hilfe der Auswerteeinheit 3 sind jedoch weiterhin mit dem Netz verbunden. Die Spannungsfestigkeit der verbleibenden Komponenten ist zwar höher als die des Verbrauchers 7, jedoch bezüglich temporärer und auch transienter Überspannungen ebenso limitiert.

Durch Öffnen des Schalters 5 ist der weitere transiente Überspannungsschutz 12 vom Netz abgetrennt und kann damit die am Netz verbleibenden Komponenten der Schaltungsanordnung nicht mehr schützen.

Hier tritt insbesondere der Überspannungsschutz 1 in Aktion, welcher mehrere Anforderungen bezüglich des Schutzes der Schaltungsanordnung übernimmt.

Der Überspannungsschutz 1 verhält sich bei geschlossenem Schalter 5 bis zur Leistungsgrenze des Überspannungsschutzes 12 passiv.

Bei geöffnetem Schalter 5 wirkt der Überspannungsschutz 1 als Schutzeinrichtung für die Baugruppen 2 und 3, welche am Netz verbleiben, und natürlich auch für den Schalter 5. Bis oberhalb der verketteten Netzspannung sind die zu schützenden Einrichtungen auch bei temporären Spannungen eigenfest. Die Überspannungsschutzeinrichtung 1 realisiert bei transienten Belastungen einen Schutzpegel < 1,5 kV bzw. < 4 kV, bevorzugt von 2,5 kV. Bei temporären Überspannungen begrenzt der Überspannungsschutz 1 bis zu seinem energetischen Leistungsvermögen die Spannung auf Werte unterhalb der Belastungsgrenze der Baugruppen 2 und 3. Somit sind diese Baugruppen hinreichend vor Überspannungen geschützt, wodurch bei Normalisierung der Spannungsverhältnisse der Normalbetrieb ohne Wartungs- oder Reparaturmaßnahmen automatisch bzw. nach einem separaten Steuerbefehl wieder aufgenommen werden kann.

Bei sehr hohen und lang andauernden temporären Überspannungen wird der Überspannungsschutz 1 nicht durch eine Schutzeinrichtung vom Netz abgetrennt. Vielmehr wird der Überspannungsschutz 1 kurzgeschlossen, wodurch eine Gefährdung der Baugruppen 2 und 3 vor Überlastung ausschließbar ist. Der Kurzschluss des Überspannungsschutzes 1 ist dabei in der Lage, den Kurzschlussstrom des Netzes bis zur Abschaltung der Überstromschutzeinrichtung zu führen.

Wenn ein solcher Fall eingetreten ist, wird vor Wiederinbetriebnahme nach Überprüfung der Überstromschutzeinrichtung nur ein Austausch dieser notwendig. Durch eine Verbindung zwischen dem Überspannungsschutz 1 und der Schnittstelle 6 kann eine diesbezügliche Meldung nach extern abgesetzt werden.

Der Überspannungsschutz 1 ist bei Anlagen ohne Gefährdung durch direkte Blitzeinschläge durch eine Schutzeinrichtung auf der Basis eines Varistors ausführbar. In Anlagen mit direkter Blitzgefährdung erfolgt eine Koordination eines Varistors mit einer Funkenstrecke.

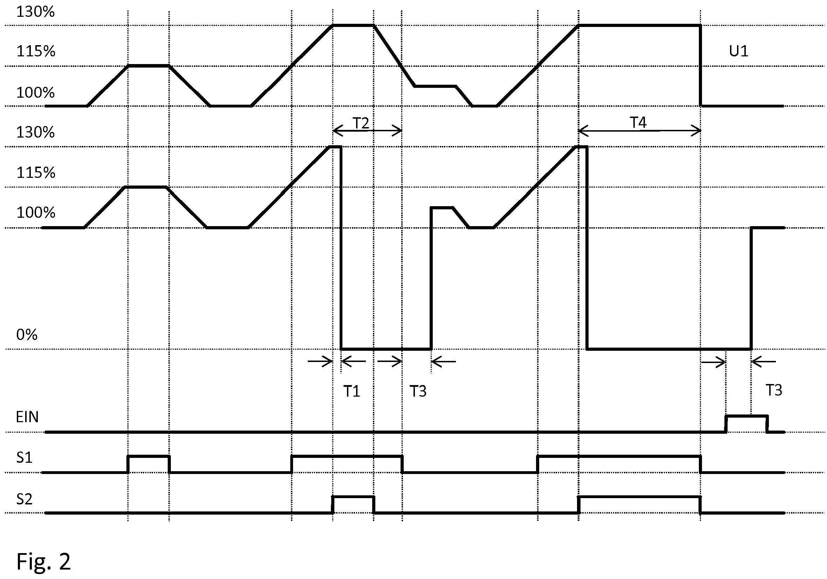

Fig. 2 zeigt beispielhafte Funktionsabläufe zur Veranschaulichung des Schaltverhaltens sowie der Spannungsverhältnisse. Die Darstellung bezieht sich aus Übersichtlichkeitsgründen im Wesentlichen auf die Verhältnisse bei temporären Überspannungen.

Die Spannung U1 stellt einen prinzipiellen Spannungsverlauf des Netzes vor dem Schalter 5 dar. Die Spannung U2 zeigt den Spannungsverlauf am Verbraucher 7 hinter dem Schalter 5.

Die Verläufe zeigen links beginnend das Netz bei einer Betriebsspannung von 100 %, welche bei geschlossenem Schalter 5 auch am Verbraucher 7 anliegt.

Danach erhöht sich die Spannung beispielsweise auf 115 % der Netzspannung. Zu diesem Zeitpunkt kann diese Überhöhung über die Baugruppe 3 und die Baugruppe 6 einer externen Überwachung für die Zeitdauer der Überschreitung des Grenzwerts gemeldet werden (S1).

Nach dem Abklingen auf Nennspannung steigt die Spannung wiederum auf einen Wert von > 115 % an. Hiernach erfolgt eine erneute Meldung über S1. Danach erreicht die Spannung einen Wert von 130 %. Neben einer Meldung über S2 erfolgt innerhalb weniger Millisekunden (T1) die Öffnung des Schalters 5. Diesbezüglich wird Energie aus dem Energiespeicher auf den Auslösemechanismus des Schalters 5 freigegeben.

Nach einer Zeitdauer T2, von z.B. < 3 s, sinkt die Spannung wieder in den zulässigen Betriebsbereich des Verbrauchers 7. Der Schalter 5 wird über die Wiedereinschaltbaugruppe 4 innerhalb einer Zeit T3 von einigen 100 Millisekunden geschlossen, ohne dass ein externes Steuersignal über die Leitung 13 erforderlich ist.

In einer weiteren Phase wiederholt sich dieser Vorgang; jedoch überschreitet die Zeitdauer T4 der Spannungsüberhöhung (> 130%) eine Zeitdauer, welche für eine automatische Zuschaltung zulässig ist. Zur Inbetriebnahme der Einrichtung, also dem Schließen des jetzt noch offenen Schalters 5, ist nun ebenso, wie bei der Erstinbetriebnahme, ein externes Steuersignal erforderlich. Liegt dieses Signal an und liegt die Spannung U1 im zulässigen Bereich, z.B. im Bereich einer Abweichung < 30 % von der Nennspannung, wird der Schalter 5 über die Baugruppe 4 wieder geschlossen.

Beim Zuschalten der Nennspannung U1 und anliegendem "Ein"-Signal wird die Inbetriebnahmezeit neben der Schalterbetätigungszeit um ca. 200 ms verlängert, welche für die Herstellung der Funktionsbereitschaft, und zwar auch zur Ladung der Energiespeichereinheit, die Bestandteil der Netzspannungsauswerteeinheit 3 sein kann, benötigt wird. Die Zeiten T2 und T4 sowie die prozentualen Spannungen als Schwellwerte sind nur beispielhaft und zur Veranschaulichung gewählt und diesbezüglich nicht eingrenzend zu verstehen.

Bei der Schaltungsanordnung nach Fig. 3 ist nur eine einzige transiente Überspannungsschutzeinheit 1 vorhanden. Den transienten Schutz für den angeschlossenen Verbraucher 7 übernimmt diese einzige Überspannungsschutzeinheit 1. Der Schalter 5 kann bei der Ausführungsform nach Fig. 3 einfacher ausgebildet sein, d.h. der hier notwendige Schalter muss nicht zum häufigen Führen von Impulsströmen geeignet sein.

Bezogen auf den eingesetzten Überspannungsschutz 1 muss jedoch dieser über einen niedrigen Schutzpegel verfügen und es muss auch eine Koordinationsfähigkeit gegenüber den in den verbraucherseitigen Endgeräten direkt verbauten Überspannungsschutzbauteilen gegeben sein. Zur Problemlösung besteht insofern die Möglichkeit, den Schutzpegel der Überspannungsschutzeinrichtung 1 mit Hilfe der Baugruppe 3 und einer Signalabgabe über die Leitung 8 beim Öffnen bzw. Schließen des Schalters 5 zu ändern. Eine Reduzierung des Schutzpegels der Überspannungsschutzeinrichtung 1 ist beispielsweise durch das Brücken von spannungsschaltenden Elementen im Triggerkreis einer Funkenstrecke möglich.

Eine vorteilhaft eingesetzte Funkenstrecke innerhalb der Überspannungsschutzeinrichtung 1 kann über eine zusätzliche Triggermöglichkeit verfügen. Mit Hilfe dieser Triggermöglichkeit kann ein Aktivieren über die Baugruppe 3, aber auch mittelbar über die Eigenschaften des zu schützenden Verbrauchers 7 in Verbindung mit der Schnittstelle 6 erfolgen. Eine Aktivierungsmöglichkeit, welche zum Ansprechen der Funkenstrecke und somit zu einer raschen Spannungsreduktion führt, kann sowohl gegebenenfalls nach zu langen Öffnungs- bzw. Unterbrechungszeiten des Schalters 5 als auch bei anderen Überlastgefährdungen infolge der noch bestehenden Netzverbindung durch den geschlossenen Schalter 5 genutzt werden.

Neben der Aktivierung der eingesetzten Funkenstrecke in der Überspannungsschutzeinrichtung 1 direkt durch den Verbraucher 7 kann auch der Schalter 5 über die Baugruppe 3 direkt bzw. parallel aktiviert werden.

Nach Öffnung des Schalters 5 kann der Schutzpegel der Überspannungsschutzeinrichtung 1 auf einen Wert eingestellt werden, welcher im optimalen Bereich für den Schutz der Baugruppen 2 und 3 liegt.

Beide Schaltungsanordnungen gemäß Fig. 1 und 3 realisieren bei offenem bzw. geschlossenem Schalter 5 einen unterschiedlichen transienten Schutzpegel und besitzen bei offenem Schalter 5 eine sehr hohe Überlastfestigkeit gegenüber temporären Überspannungen ohne Verlust der Funktionalität und ohne Wartungsaufwand bezogen auf den zu schützenden Verbraucher.

## Patentansprüche

1. Schaltungsanordnung zum Schutz von an einem mehrphasigen Netz (L1; L2; L3) angeschlossenen Verbrauchern (7) mit Unter- und Überspannungsabschaltfunktion, transientem Überspannungsschutz (1) und Netzwiederzuschaltung,
wobei der jeweilige Verbraucher (7) mittels eines mehrpoligen Schalters (5) mit dem Netz (L1; L2; L3) verbindbar sowie zwischen dem Schalter (5) und dem Netz (L1; L2; L3) der transiente Überspannungsschutz (1) vorgesehen ist, weiterhin
mit einer Netzspannungsauswerteeinheit (3), welche zur Auslösung des Schalters (5) mit diesem steuerungsseitig und mit einer Wiedereinschalteinheit (4) verbunden ist, und einer am Netz (L1; L2; L3) anliegenden Spannungsversorgungsbaugruppe (2), **dadurch gekennzeichnet, dass**
der Schalter (5) als schnellauslösender, mechanischer, induktivitätsarmer Schalter und zur Führung von Impulsströmen ausgebildet ist,
wobei der Schalter (5) mit einer Energiespeichereinheit verbunden ist, welche dazu eingerichtet ist, die für das Auslösen des Schalters (5) erforderliche Energie unabhängig vom Netzzustand und der jeweiligen Phasenlage bereitzustellen,
wobei der Schalter (5) als schnellauslösender Schalter dazu eingerichtet ist, den transienten Überspannungsschutz (1) in einer Zeit < 10 ms vom Netz (L1; L2; L3) abzutrennen, und
wobei der Schalter (5) als induktivitätsarmer Schalter frei von thermischen Auslöseeinrichtungen und nicht in eine Differenzstromauswertung eingebunden ist,
wobei der transiente Überspannungsschutz (1) einen einstellbaren Schutzpegel aufweist, der beim Öffnen oder Schließen des Schalters (5) in Abhängigkeit von einem Ausgangssignal der Netzspannungsauswerteeinheit (3) anpassbar oder umschaltbar ist.

2. Schaltungsanordnung nach Anspruch 1, **dadurch gekennzeichnet, dass** der transiente Überspannungsschutz (1) dazu eingerichtet ist, bei ausgelöstem Schalter (5) die am Netz (L1; L2; L3) verbleibenden Komponenten (2; 3) gegen Überspannungen zu sichern und bei hohen und lang andauernden temporären Überspannungen in einen Kurzschlusszustand überzugehen.

3. Schaltungsanordnung nach Anspruch 1 oder 2, **dadurch gekennzeichnet, dass** ausgangsseitig des Schalters (5) ein verbraucherseitiger weiterer Überspannungsschutz (12) vorgesehen ist, welcher ein Ableitvermögen von 20 kA der Impulsform 8/20 µs und einen Schutzpegel von 1,5 kV besitzt, der für das Erlauben niedriger Schutzpegel < 1,5 kV für den jeweils angeschlossenen Verbraucher bei temporären Überspannungen durch Öffnen des Schalters (5) abtrennbar ist.

4. Schaltungsanordnung nach einem der vorangegangenen Ansprüche, **dadurch gekennzeichnet, dass** die Wiedereinschalteinheit (4) in Verbindung mit dem Schalter (5) in der Lage ist, diesen innerhalb einer Zeitdauer von < 1 s, bevorzugt < 200 ms, zu schließen oder zu öffnen.

5. Schaltungsanordnung nach Anspruch 4, **dadurch gekennzeichnet, dass** die Spannungsversorgungsbaugruppe (2) oder ein Pufferspeicher dazu eingerichtet ist, die Energie für die Wiedereinschalteinheit (4) bereitzustellen.

6. Schaltungsanordnung nach einem der vorangegangenen Ansprüche, **dadurch gekennzeichnet, dass** eine externe Überwachung des Zustands des Schalters (5) sowie ein externes Betätigen des Schalters (5) über eine Schnittstelle (6; 13) realisierbar ist.

7. Schaltungsanordnung nach einem der vorangegangenen Ansprüche, **dadurch gekennzeichnet, dass** der mehrpolige Schalter (1) ohne Schaltverzug zwischen den jeweiligen Phasen ausgebildet ist.

8. Schaltungsanordnung nach einem der vorangegangenen Ansprüche, **dadurch gekennzeichnet, dass** der transiente Überspannungsschutz (1) als eine triggerbare Funkenstreckenanordnung ausgeführt ist.

## Claims

1. A circuit arrangement for protecting loads (7) connected to a multiphase network (L1; L2; L3) having an undervoltage and overvoltage switch-off function, a transient overvoltage protector (1) and network reconnection,
wherein the respective load (7) is adapted to be connected to the network (L1; L2; L3) by means of a multipole switch (5) and the transient overvoltage protector (1) is provided between the switch (5) and the network (L1; L2; L3), furthermore
comprising a network voltage evaluation unit (3) which, for tripping the switch (5), is connected thereto on the control side and to a reclosing unit (4), and a voltage supply assembly (2) applied to the network (L1; L2; L3), **characterized in that**
the switch (5) is designed as a fast-tripping, mechanical, low-inductance switch and for carrying pulsed currents,
wherein the switch (5) is connected to an energy storage unit which is configured to provide the energy required for tripping the switch (5) irrespective of the network state and the respective phase position,
wherein the switch (5), as a fast-tripping switch, is configured to disconnect the transient overvoltage protector (1) from the network (L1; L2; L3) within a time < 10 ms, and
wherein the switch (5), as a low-inductance switch, is free of thermal tripping devices and is not involved in a residual current evaluation,
wherein the transient overvoltage protector (1) has an adjustable protection level which can be adapted or switched over as a function of an output signal of the network voltage evaluation unit (3) when the switch (5) is opened or closed.

2. The circuit arrangement according to claim 1, **characterized in that** the transient overvoltage protector (1) is configured to safeguard the components (2; 3) remaining on the network (L1; L2; L3) against overvoltages upon the switch (5) being tripped and to change to a short-circuit state in the case of high and long-lasting temporary overvoltages.

3. The circuit arrangement according to claim 1 or 2, **characterized in that** on the output side of the switch (5) a further overvoltage protector (12) is provided on the load side, which has a discharge capacity of 20 kA of the pulse shape 8/20 µs and a protection level of 1.5 kV, which is adapted to be disconnected by opening the switch (5) to permit low protection levels < 1.5 kV for the respectively connected load in the event of temporary overvoltages.

4. The circuit arrangement according to any of the preceding claims, **characterized in that** the reclosing unit (4) in connection with the switch (5) is capable of closing or opening the latter within a time period of < 1 s, preferably < 200 ms.

5. The circuit arrangement according to claim 4, **characterized in that** the voltage supply assembly (2) or a buffer storage is configured to provide the energy for the reclosing unit (4).

6. The circuit arrangement according to any of the preceding claims, **characterized in that** an external monitoring of the state of the switch (5) and an external actuation of the switch (5) can be realized via an interface (6; 13).

7. The circuit arrangement according to any of the preceding claims, **characterized in that** the multipole switch (1) is designed without switching delay between the respective phases.

8. The circuit arrangement according to any of the preceding claims, **characterized in that** the transient overvoltage protector (1) is in the form of a triggerable spark gap arrangement.

## Revendications

1. Agencement de circuit pour la protection de consommateurs (7) raccordés à un réseau polyphasé (L1 ; L2 ; L3) avec une fonction de coupure en cas de sous-tension et de surtension, de protection transitoire contre les surtensions (1) et de remise en circuit du réseau,
le consommateur respectif (7) étant apte à être relié au réseau (L1 ; L2 ; L3) au moyen d'un commutateur multipolaire (5), et la protection transitoire contre les surtensions (1) étant prévue entre le commutateur (5) et le réseau (L1 ; L2 ; L3),
comprenant en outre une unité d'évaluation (3) de la tension du réseau qui, pour déclencher le commutateur (5), est reliée à celui-ci du côté commande et à une unité de réenclenchement (4), et un ensemble d'alimentation en tension (2) appliqué au réseau (L1 ; L2 ; L3), **caractérisé en ce que**
le commutateur (5) est réalisé sous forme de commutateur mécanique à déclenchement instantané et à faible inductance et pour la conduction de courants impulsionnels,
le commutateur (5) étant relié à une unité d'accumulation d'énergie aménagée de manière à fournir l'énergie nécessaire au déclenchement du commutateur (5) indépendamment de l'état du réseau et de la position de phase respective,
le commutateur (5) sous forme de commutateur à déclenchement instantané étant aménagé de manière à déconnecter la protection transitoire contre les surtensions (1) du réseau (L1 ; L2 ; L3) en l'espace d'une durée < 10 ms, et
le commutateur (5) sous forme de commutateur à faible inductance étant exempt de moyens de déclenchement thermiques et n'étant pas intégré dans une évaluation de courant différentiel,
la protection transitoire contre les surtensions (1) présentant un niveau de protection réglable qui peut être adapté ou commuté en fonction d'un signal de sortie de l'unité d'évaluation (3) de la tension du réseau lors de l'ouverture ou de la fermeture du commutateur (5).

2. Agencement de circuit selon la revendication 1, **caractérisé en ce que** la protection transitoire contre les surtensions (1) est aménagée de manière à protéger les composants (2 ; 3) restant sur le réseau (L1 ; L2 ; L3) contre des surtensions lorsque le commutateur (5) est déclenché et à passer à un état de court-circuit en cas de surtensions temporaires élevées de longue durée.

3. Agencement de circuit selon la revendication 1 ou 2, **caractérisé en ce que** du côté sortie du commutateur (5), il est prévu une protection (12) contre les surtensions supplémentaire côté consommateur, laquelle a une capacité de dérivation de 20 kA de la forme d'impulsion 8/20 µs et un niveau de protection de 1,5 kV, et qui est apte à être déconnectée en cas de surtensions temporaires par l'ouverture du commutateur (5) pour permettre des niveaux de protection faibles < 1,5 kV pour le consommateur respectivement raccordé.

4. Agencement de circuit selon l'une des revendications précédentes, **caractérisé en ce que** l'unité de réenclenchement (4), ensemble avec le commutateur (5), est apte à fermer ou ouvrir ce dernier en l'espace d'une durée de < 1 s, de préférence < 200 ms.

5. Agencement de circuit selon la revendication 4, **caractérisé en ce que** l'ensemble d'alimentation en tension (2) ou un réservoir d'accumulation est aménagé pour fournir l'énergie pour l'unité de réenclenchement (4).

6. Agencement de circuit selon l'une des revendications précédentes, **caractérisé en ce qu'**une surveillance externe de l'état du commutateur (5) ainsi qu'un actionnement externe du commutateur (5) peut être réalisée par l'intermédiaire d'une interface (6 ; 13).

7. Agencement de circuit selon l'une des revendications précédentes, **caractérisé en ce que** le commutateur polyphasé (1) est réalisé sans retard de commutation entre les phases respectives.

8. Agencement de circuit selon l'une des revendications précédentes, **caractérisé en ce que** la protection transitoire contre les surtensions (1) est réalisée sous forme d'agencement d'éclateur déclenchable.
